# EUROPEAN PATENT APPLICATION

(11) **EP 4 693 678 A1**
(43) Date of publication of application: **11.02.2026**
(21) Application number: 24927597.5
(22) Date of filing: 12.12.2024
(51) Int. Cl.: H01M 50/342, H01M 50/383, H01M 50/249

(54) **BATTERY MODULE COVER AND BATTERY PACK, AND VEHICLE INCLUDING SAME**

(30) Priority: 12.06.2024 KR 20240076518
(71) Applicant: LG ENERGY SOLUTION, LTD., Seoul 07335 (KR)
(72) Inventor: PARK, Sang Jun, Daejeon 34122 (KR)
(74) Representative: BCKIP Part mbB
(86) International application number: PCT/KR2024/020288
(87) International publication number: WO 2025/258767

(57) **Abstract**

Disclosed are a battery module cover including a cover plate covering one side of a battery module and having a plurality of through holes, and an insulating sheet provided between the cover plate and battery cells and having a venting portion formed at a point corresponding to each of the through holes of the cover plate, the venting portion including a pair of cut lines and a non-cut portion provided between the pair of cut lines, a battery pack, and a vehicle including the same.

## Description

### [TECHNICAL FIELD]

The present disclosure relates to a battery module cover and a battery pack capable of effectively dealing with gas or flames generated in an abnormal battery state to improve safety, and a vehicle including the same.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions, highdensity metal ions are used to increase the capacity, charge/discharge performance, and efficiency of a battery, and much research is being conducted on materials constituting electrolytes and solid electrolytes. However, as battery performance improves, there is a problem of decreased stability in general.

Batteries used in vehicles, industries, and homes are manufactured as physical units called packs. A battery pack performs functions of preventing fire from spreading to the outside in the event of an accident such as battery thermal runaway by embedding multiple battery cells inside a battery case and sealing the same, and protecting the internal battery cells from deterioration due to the influence of the external environment or damage due to physical factors.

Multiple battery cells are embedded in a battery pack in an intermediate form of a module or an assembly (cell module assembly (CMA)). In the case of a battery module or assembly, multiple battery cells are assembled into a single module or assembly, and multiple modules are fastened inside a pack case, thereby completing a battery pack. When servicing a battery, maintenance is made easy by allowing maintenance to be performed in units of such modules or assemblies.

Each of multiple unit battery cells constituting a module or assembly is composed of a positive electrode, a negative electrode, and an electrolyte. Since battery cells generate heat during charging and discharging, effective heat dissipation for the battery cells is required. In addition, from the perspective of battery modules, assemblies, and battery packs, design for efficient heat dissipation is necessary to prevent safety accidents.

Meanwhile, batteries may deteriorate due to manufacturing errors, excessive charging and discharging, and aging. If battery deterioration continues, it can eventually cause a fire. Therefore, it is necessary to prepare in advance to prevent a fire from occurring in batteries. To this end, it is important to continuously sense the status of a battery, recognize and respond to a problem when the problem has occurred, and it is necessary to minimize damage when an unexpected problem occurs.

In particular, when a fire occurs in a specific battery module or battery cell within a battery pack, the gas or flames may easily spread to adjacent battery modules or battery cells because the inside of the battery pack is sealed. Therefore, when a fire occurs in a specific battery module or battery cell within a battery pack, it is important to smoothly vent gas from a battery module or battery cell where a fire has occurred, while preventing or delaying the spread of flames to other adjacent battery modules or battery cells.

The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve the aforementioned problems is to provide a battery module cover and a battery pack capable of preventing a fire from spreading to adjacent modules or cells when the fire has occurred in a specific battery module or battery cell while facilitating gas venting, thereby improving battery safety, and a vehicle including the same.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

A battery module cover according to the present disclosure to achieve the aforementioned object includes a cover plate covering one side of a battery module and having a plurality of through holes, and an insulating sheet provided between the cover plate and battery cells and having a venting portion formed at a point corresponding to each of the through holes of the cover plate, the venting portion including a pair of cut lines and a non-cut portion provided between the pair of cut lines.

In the battery module cover according to the present disclosure, the insulating sheet may be formed by combining a fire-resistant material and a woven fabric.

In the battery module cover according to the present disclosure, the venting portion of the insulating sheet may be equal to or smaller than the size of the through hole of the cover plate.

In the battery module cover according to the present disclosure, the non-cut portion of the venting portion may be formed at a point between the pair of cut lines.

In the battery module cover according to the present disclosure, each of the cut lines of the venting portion may be composed of a base part and a branch part, the base part may be formed to extend in a longitudinal direction of the through hole of the cover plate, and the branch part may branch and extend in an inclined direction from an end of the base part.

In the battery module cover according to the present disclosure, the branch parts included in the pair of cut lines may be formed at ends of the base parts further away from each other, and ends of the base parts closer to each other may face each other while being spaced apart from each other.

In the battery module cover according to the present disclosure, the non-cut portion of the venting portion may be formed at a point between the base parts of the pair of cut lines.

In the battery module cover according to the present disclosure, the cut line of the venting portion may include a plurality of base parts, and the branch part may branch and extend in an inclined direction from a center point of the plurality of base parts.

In the battery module cover according to the present disclosure, the plurality of base parts may be arranged in parallel.

In the battery module cover according to the present disclosure, the branch part may be connected to ends of the plurality of base parts.

In the battery module cover according to the present disclosure, a plurality of battery cells may constitute one unit cell bank, a cut line corresponding to the unit cell bank may include a plurality of base parts arranged in parallel, and the base parts may be arranged to correspond to a point between two adjacent battery cells.

In the battery module cover according to the present disclosure, a plurality of battery cells may be provided inside the battery module, and the through hole of the cover plate may be formed at a point between adjacent pairs of battery cells such that the through hole overlaps at least a portion of an upper surface of the pair of battery cells facing the insulating sheet.

In the battery module cover according to the present disclosure, the venting portion of the insulating sheet may be cut open when the battery module catches fire to allow gas or flame to be discharged.

In the battery module cover according to the present disclosure, the pair of cut lines of the venting portion may be formed such that closer ends of the cut lines face each other, the ends of the pair of cut lines facing each other may be spaced apart from each other by a length of 3 mm or less, and the non-cut portion may be formed between the ends of the pair of cut lines spaced apart from each other.

In the battery module cover according to the present disclosure, the through hole of the cover plate may have an oval shape in which a length of the through hole in the longitudinal direction of the cover plate is greater than a length in the width direction of the cover plate.

In the battery module cover according to the present disclosure, an outer plate may be bonded to an outer side of the cover plate, and the outer plate may be composed of a plurality of heat-resistant sheets and a silicone sheet positioned between the heat-resistant sheets.

In the battery module cover according to the present disclosure, the outer plate may include a provisional cut line formed in the silicon sheet and the plurality of heat-resistant sheet and having the same shape as the through hole, the provisional cut line being formed at a position corresponding to the through hole and the venting portion.

In the battery module cover according to the present disclosure, a plurality of provisional cut lines may be formed in the outer plate, and the provisional cut lines may be cut open by a pressure inside the battery module.

A battery pack according to the present disclosure includes aforementioned the battery module cover.

A vehicle according to the present disclosure includes the aforementioned battery pack.

### [EFFECT OF INVENTION]

According to the battery module cover, the battery pack, and the vehicle including the same of the present disclosure, when a fire occurs in a specific battery module or battery cell, the spread of fire to other adjacent battery modules or battery cells can be prevented, and at the same time, gas venting from an abnormal battery module or battery cell can be facilitated, thereby improving the safety of a system in which the battery module cover is utilized.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is an exploded perspective view of a battery module cover according to an embodiment of the present disclosure.
FIG. 2 is a cross-sectional view of the battery module cover illustrated in FIG. 1 in an assembled state.
FIG. 3 is a cross-sectional view of the battery module cover illustrated in FIG. 1.
FIG. 4 is a top view showing a state in which a cover plate and an insulating sheet of the battery module cover illustrated in FIG. 1 are combined.
FIG. 5 is an enlarged view of a through hole and a venting part of the battery module cover illustrated in FIG. 4.
FIG. 6 is a diagram showing a venting part of the battery module cover according to an embodiment of the present disclosure.
FIG. 7 is a cross-sectional view of the battery module cover illustrated in FIG. 6 positioned above a pair of battery cells.
FIG. 8 is a diagram showing a venting part of the battery module cover according to another embodiment of the present disclosure.
FIG. 9 is a cross-sectional view of the battery module cover illustrated in FIG. 8 positioned to correspond to one unit cell bank.
FIG. 10 is a diagram showing a battery pack and a vehicle to which the battery module cover illustrated in FIG. 1 is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

An element described in the singular form is intended to include a plurality of elements unless the context clearly indicates otherwise. In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof.

The suffixes "module" and "unit" of elements used in the following description are used for convenience of description and thus can be used interchangeably and do not have any distinguishable meanings or functions. When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

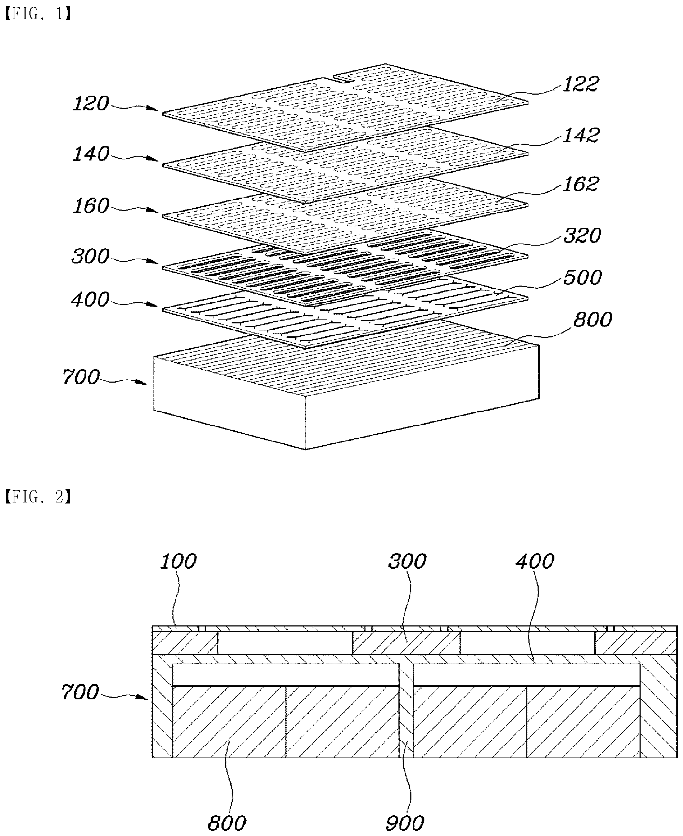

Hereinafter, embodiments disclosed in this specification will be described in detail with reference to the attached drawings. Regardless of the drawing symbols, identical or similar components will be given the same reference numerals and redundant descriptions thereof will be omitted. A battery is made up of a plurality of battery cells 800 that form a single battery module 700, and multiple battery modules 700 are assembled into a battery pack BP. The battery module 700 mentioned in the present disclosure means an assembly in which a plurality of battery cells 800 is assembled, and includes not only a case in which battery cells 800 are stacked in a separate housing or case as shown in FIG. 1, but also various cases in which a plurality of battery cells 800 is assembled in the form of a strap or a frame to form a single unit assembly.

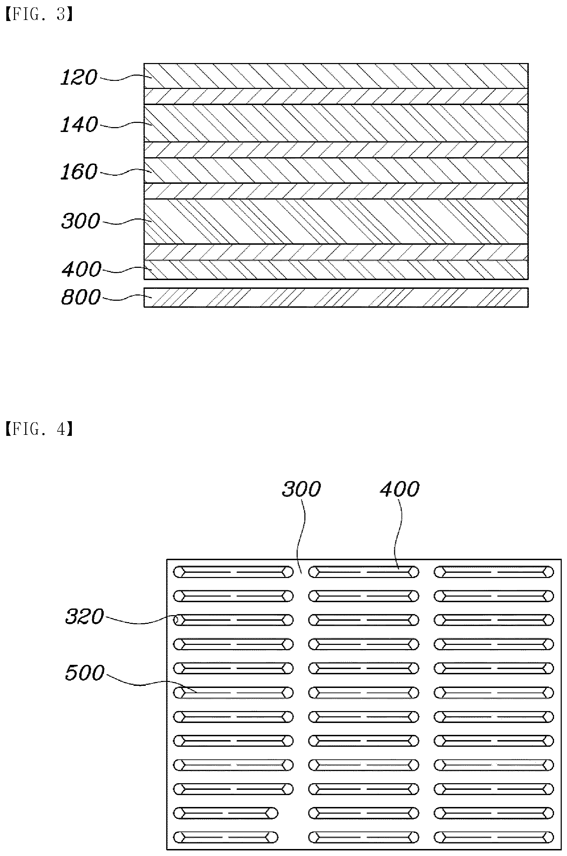

A battery deteriorates due to various causes such as a defect in the design or manufacturing process, excessive charging or discharging, or misuse, and when battery cells 800 constituting a battery deteriorate and a temperature above a certain level is maintained, a thermal runaway phenomenon that causes an explosion inside the battery occurs. In the event of thermal runaway, gas or flame can easily spread to adjacent battery modules 700 or battery cells 800, as shown in FIG. 3, causing secondary damage. Therefore, it is important to prevent flames from spreading to adjacent battery modules 700 or battery cells 800 when thermal runaway occurs in a specific battery module 700 or battery cell 800, while ensuring smooth gas discharge from the battery module 700 or battery cell 800.

Conventionally, battery cells 800 are protected by a cover of the battery module 700 formed of a film made of polycarbonate (PC) and the upper surface of the cover of the battery module is protected by a single-layer heat-resistant sheet 120, and thus the battery module 700 cannot be sufficiently protected when thermal runaway has occurred in a specific battery cell 800 or battery module 700.

As shown in FIGS. 1 to 3, the present disclosure proposes a battery module cover having an insulating sheet 400 that is made of mica material combined with a woven fabric and provided at the bottom of the battery module cover to reinforce insulation and fire resistance, and a venting part 500 formed in the insulating sheet 400 to facilitate discharge of gas or flame in a high-pressure environment created when thermal runaway occurs in a specific battery cell 800 or battery module 700.

In addition, in the case of the battery module cover of the present disclosure, as shown in FIG. 1, an insulating sheet 400 made of mica material combined with a woven fabric is bonded to the lower surface of the cover, and an outer plate 100 composed of a plurality of heat-resistant sheets 120 and 160 and a silicone sheet 140 in which provisional cut lines 122, 142, and 162 having the same shape as a through hole 320 of a cover plate 300 are formed is bonded to the upper surface of the cover, thereby preventing the battery module cover from being easily damaged in the event of thermal runaway in a specific battery module 700 or battery cell 800.

Specifically, referring to FIG. 1, the battery module cover of the present disclosure includes the cover plate 300 that covers one side of the battery module 700 and has a plurality of through holes 320 formed therein, and the insulating sheet 400 having venting portions 500 formed at points corresponding to the through holes 320 of the cover plate 300 and provided between the cover plate 300 and the battery cell 800. Each venting portion 500 of the insulating sheet 400 has a fishbone-shaped pattern composed of a pair of cut lines 520 and a non-cut portion 540 positioned between the pair of cut lines 520.

In addition, as shown in FIGS. 1 to 3, the outer plate 100 is bonded to the outside of the cover plate 300, and the provisional cut lines 122, 142 and 162 having the same shape as the through holes 320 are formed at positions corresponding to the through holes 320 of the cover plate 300. That is, the provisional cut lines 122, 142, and 162 of the outer plate 100, the through holes 320 of the cover plate 300, and the venting portions 500 of the insulating sheet 400 are formed at positions corresponding to each other, and thus gas or flame generated when thermal runaway occurs in the battery cell 800 located under the insulating sheet 400 can be sequentially discharged through the venting portions 500, the through holes 320, and the provisional cut lines 122, 142, and 162, and flowing of gas or flame back into an adjacent battery module 700 or battery cell 800 can be prevented by the outer plate 100, the cover plate 300, and the insulating sheet 400, thereby preventing the thermal propagation phenomenon.

In addition, referring to FIG. 3, bonding parts are provided between the outer heat-resistant sheet 120 and the silicone sheet 140, between the silicone sheet 140 and the inner heat-resistant sheet 160, between the inner heat-resistant sheet 160 and the cover plate 300, and between the cover plate 300 and the insulating sheet 400, and the bonding parts may be made of a heat-resistant material that does not lose its adhesive strength even in a high temperature or high pressure environment created during thermal runaway in a specific battery module 700 or battery cell 800.

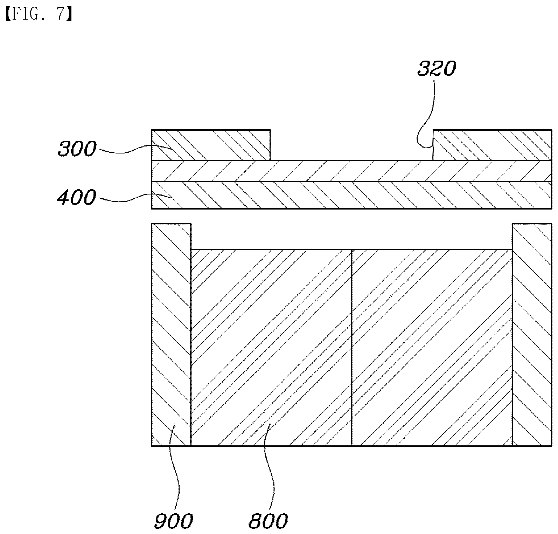

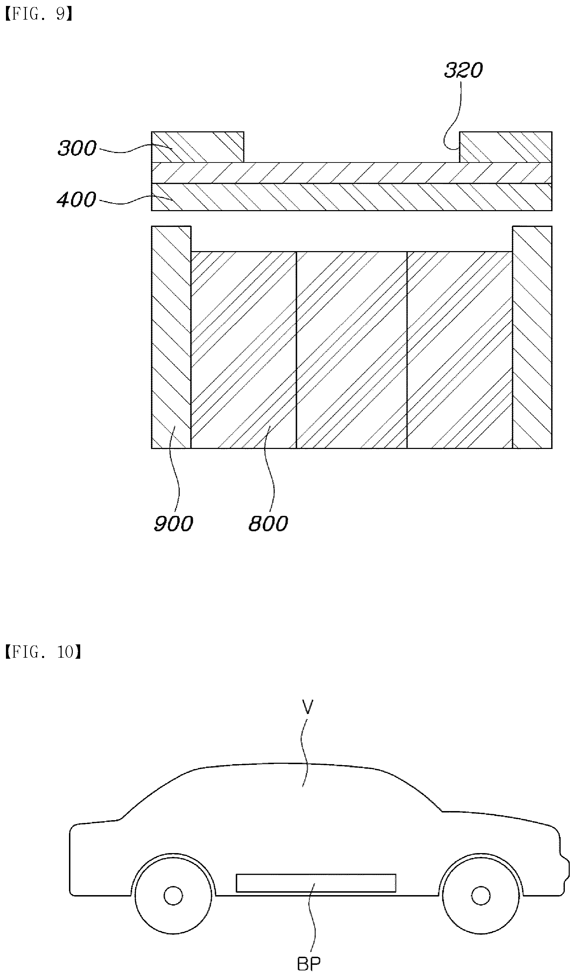

Likewise, FIG. 7 or 9 shows that a bonding part for bonding the cover plate 300 and the insulating sheet 400 is provided therebetween.

Although the battery module cover of the present disclosure is described as being located on the top of the battery cells 800 as shown in FIG. 1, the battery module cover may be attached to various positions such as the side or bottom of a unit assembly of a plurality of battery cells 800 as well as the top of the battery cells 800 to protect the battery cells 800 or the battery module 700.

The insulating sheet 400 is bonded to the bottom of the battery module cover of the present disclosure as shown in FIGS. 1 to 3. The insulating sheet 400 is formed by combining a fire-resistant material and a woven fabric. The woven fabric is made of a material such as a mesh-shaped glass fiber, which serves to increase the durability of the battery module cover. In the case of the fire-resistant material, mica is used to reduce the risk of the battery module cover easily melting or the structure thereof being destroying in a high temperature or high pressure environment inside the battery module 700. However, the materials mentioned above are examples to aid in understanding, and in addition to the materials mentioned above, various fire-resistant materials or woven fabrics may be combined to form the insulating sheet 400.

As shown in FIG. 4, the venting portions 500 are formed in the insulating sheet 400 to smoothly discharge gas or flame generated in the event of thermal runaway in a specific battery module 700 or battery cell 800 to the outside. Since the insulating sheet 400 forms the battery module cover together with the cover plate 300, the venting portions 500 of the insulating sheet 400 are formed in a shape that is equal to or smaller than the size of the through hole 320 of the cover plate 300 such that gas or flame can pass through both the venting portions 500 and the through holes 320 and be discharged to the outside when thermal runaway occurs in a specific battery module 700 or battery cell 800.

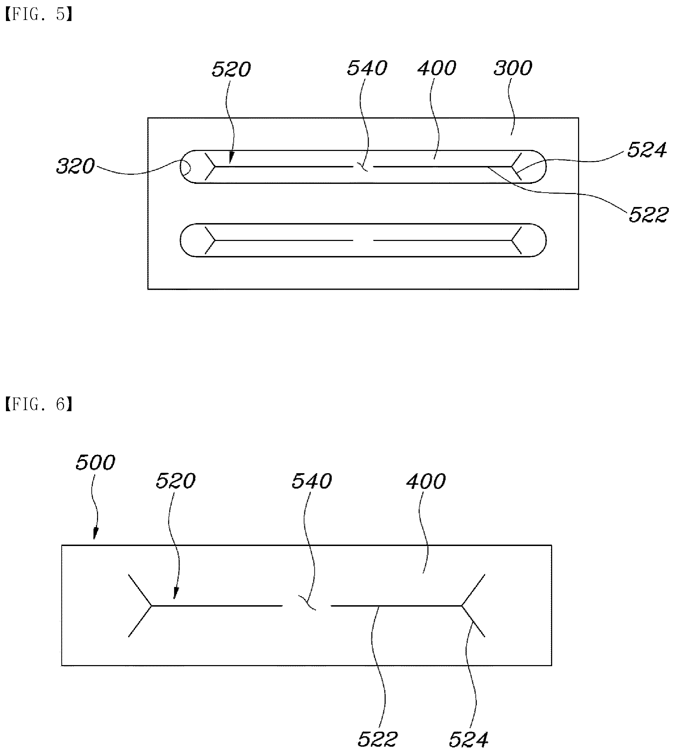

Each venting portion 500 is composed of a pair of cut lines 520 and a non-cut portion 540 provided between the pair of cut lines 520, as illustrated in FIG. 5. Since the insulating sheet 400 is formed in a structure in which a mesh-shaped woven fabric is laminated in addition to a fire-resistant material such as mica, it has excellent durability and does not easily melt or tear. Therefore, if the venting portion 500 is formed as a provisional cut line, there is a risk that gas or flame will not be discharged to the outside when thermal runaway occurs in a specific battery module 700 or battery cell 800 because the provisional cut line of the venting portion 500 will not be cut due to the excellent durability of the insulating sheet 400. Accordingly, in the present disclosure, unlike the provisional cut lines 122, 142, and 162 of the outer plate 100, the venting portions 500 of the insulating sheet 400 are formed as cut lines 520 and thus can be smoothly cut open in the event of thermal runaway in a specific battery module 700 or battery cell 800, thereby effectively discharging gas or flames.

The venting portion 500 of the insulating sheet 400 includes the non-cut portion 540 as shown in FIG. 5. Although gas or flame generated during thermal runaway in a specific battery module 700 or battery cell 800 needs to be smoothly discharged to the outside, if a large amount of gas or flame is discharged to the outside through the battery module cover in an instant, there is a risk of the battery module cover being damaged, and thus it is necessary to prevent the instantaneous discharge of gas or flame. Therefore, the present disclosure can prevent the venting portion 500 from being momentarily cut open significantly during thermal runaway occurring in a specific battery module 700 or battery cell 800 by providing the non-cut portion 540 between a pair of cut lines 520, thereby preventing the battery module cover from being exposed to a high temperature or high pressure environment in an instant.

Referring to FIG. 5, the venting portion 500 of the insulating sheet 400 is formed such that ends of a pair of cut lines 520 that are close to each other face each other, and the ends of the pair of cut lines 520 that face each other are spaced apart by a length of 3 mm or less. The non-cut portion 540 located between the pair of cut lines 520 is formed between the ends of the pair of cut lines 520 that are spaced apart by a length of 3 mm or less as described above, and by forming the non-cut portion 540 to a short length of 3 mm or less, the cut lines 520 can be smoothly opened in a high-pressure environment created during thermal runaway in a specific battery module 700 or battery cell 800.

In a case where the non-cut portion 540 is formed to be 3 mm or longer in length or a plurality of non-cut portions 540 is provided, the cut lines may not be completely opened or may be partially opened due to excellent durability of the insulating sheet 400 including the woven fabric and thus there is a risk that gas or flame due to thermal runaway may not be smoothly discharged. Therefore, by providing the non-cut portion 540 by separating the facing ends of the pair of cut lines 520 by a length of 3 mm or less, it is possible to prevent the battery module cover from being damaged when a large amount of gas or flame is instantaneously discharged in the event of thermal runaway while effectively discharging the gas or flame to the outside.

As described above, the venting portions 500 of the insulating sheet 400 serve to effectively discharge gas or flame generated in the event of thermal runaway in a specific battery module 700 or battery cell 800 to the outside. Therefore, the present disclosure proposes the fishbone-shaped venting portion 500 in which the cut line 520 of the venting portion 500 is composed of a base part 522 and a branch part 524, as shown in FIG. 5 or FIG. 6. Specifically, the cut line 520 of the venting portion 500 is composed of the base part 522 and the branch part 524, the base part 522 extends in the longitudinal direction of the through hole 320 of the cover plate 300, and the branch part 524 branches and extends in an inclined direction from the end of the base part 522.

When this cut line 520 is formed as a pair as in FIG. 5 or FIG. 6, the branch parts 524 included in the pair of cut lines 520 are formed at the ends of the base parts 522 that are farther away from each other, and the ends of the base parts 522 that are closer to each other face each other while being spaced apart from each other. In addition, the non-cut portion 540 of the venting portion 500 is formed between the ends of the base parts 522 that are closer to each other and spaced apart from each other, thereby forming one venting portion 500. That is, by forming the venting portion 500 of the insulating sheet 400 in a shape in which fishbone shapes as described above face each other, it is possible to effectively discharge gas or flame generated during thermal runaway in a specific battery module 700 or battery cell 800 to the outside.

As illustrated in FIG. 5 or FIG. 6, the venting portion 500 of the insulating sheet 400 can be effectively cut open in the event of thermal runaway since the cut line 520 is composed of the base part 522 and the branch part 524. The branch part 524 is formed to branch and extend in an inclined direction from the end of the base part 522 and thus can be smoothly cut in a high-pressure environment created by thermal runaway, and since the cut line 520 that is cut open by the branch part 524 is continuously cut through the base part 522 extending in the longitudinal direction of the through hole 320, the venting portion 500 can be completely cut open according to the shape of the through hole 320. In addition, the non-cut portion 540 is disposed between a pair of cut lines 520, thereby preventing damage to the battery module cover by preventing a large amount of gas or flame from being discharged to the outside due to instantaneous opening of the cut line 520 in the event of thermal runaway in a specific battery module 700 or battery cell 800.

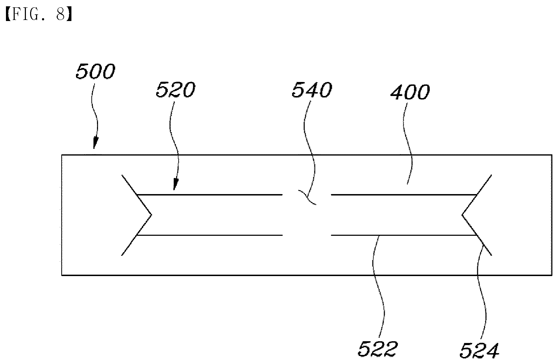

Meanwhile, the cut line 520 of the venting portion 500 may include a plurality of base parts 522 as shown in FIG. 8. In this case, the branch part 524 is connected to the ends of the plurality of base parts 522 and extends in an inclined direction from the center point of the plurality of base parts 522, and it is preferable that the plurality of base parts 522 be formed in a parallel for smooth opening of the venting portion 500. By forming a plurality of base parts 522 of the venting portion 500, the venting portion 500 can be effectively and safely opened depending on the number of battery cells 800 included in one unit cell bank.

Referring to FIG. 7 or FIG. 9, a plurality of adjacent battery cells 800 form one unit cell bank, and a compression pad 900 is disposed between unit cell banks. The compression pad 900 protects the battery cells 800 from external impact and prevents the risk of fire due to friction between the battery cells 800, and the cell bank can be distinguished by the compression pad 900.

Referring to FIG. 9, in the present disclosure, a plurality of battery cells 800 constitutes one unit cell bank, a plurality of base parts 522 arranged in parallel is included in the cut line 520 corresponding to the unit cell bank, and the base parts 522 may be arranged between two adjacent battery cells 800. According to this arrangement, even if thermal runaway occurs in the battery cells 800 forming one unit cell bank, gas or flame can be effectively discharged to the outside through the base parts 522 or branch parts 524 of the cut line 520.

In addition, as shown in FIG. 7, when the compression pad 900 is formed for a pair of adjacent battery cells 800 among a plurality of battery cells 800 provided inside a battery module 700, the through hole 320 of the cover plate 300 may be formed at a point between the adjacent battery cells 800 such that the through hole 320 may overlap at least a part of the upper surface of the pair of battery cells 800 facing the insulating sheet 400.

As shown in FIG. 7, when a pair of battery cells 800 constitutes a unit cell bank, the cut line 520 of the venting portion 500 may include one base part 522 such that gas or flame can be effectively discharged. In addition, the through hole 320 of the cover plate 300 is formed at a point corresponding to the venting portion 500 of the insulating sheet 400, and the size of the venting portion 500 of the insulating sheet 400 is equal to or less than the size of the through hole 320 of the cover plate 300, as described above, and thus when a pair of battery cells 800 constitutes one unit cell bank, the venting portion 500 of the insulating sheet 400 is also formed such that at least a portion thereof overlaps the upper surface of the pair of battery cells 800.

Meanwhile, the cover plate 300 may be formed of a metal material as a central cover that supports the battery module cover, and may be formed of aluminum among metals because the battery module 700 constituting a vehicle component needs to be durable and easy to form. Since a plurality of through holes 320 of the cover plate 300 is formed to be spaced apart from each other and has a shape of open hole, the through holes 320 can improve assembly stability and durability of the cover plate 300 by being formed integrally with the cover plate 300.

The through hole 320 of the cover plate 300 is a hole that serves as an exhaust port through which gas or flame generated during thermal runaway in the battery module 700 or battery cell 800 passes, as shown in FIG. 1, and thus is formed in an open form. In addition, the through hole 320 of the cover plate 300 may be formed in an oval shape in which the length of the portion extending in the longitudinal direction of the cover plate 300 is greater than the length extending in the width direction of the cover plate 300 such that gas or flame caused by thermal runaway can be smoothly discharged.

Although a case in which a plurality of through holes 320 is formed in an oval shape in the cover plate 300, as illustrated in FIG. 1 is described in the present disclosure, the through holes 320 may be formed in various shapes such as a circle and a square in addition to an oval shape as long as the through holes 320 can smoothly discharge gas or flame caused by thermal runaway.

In the battery module cover of the present disclosure, the insulating sheet 400 is provided between the cover plate 300 and the battery cell 800 and bonded to the cover plate 300, as shown in FIGS. 1 to 3, and the outer plate 100 is bonded to the outside of the cover plate 300. The outer plate 100 is composed of the plurality of heat-resistant sheets 120 and 160 and the silicone sheet 140 positioned between the heat-resistant sheets 120 and 160, and the plurality of heat-resistant sheets 120 and 160 may have a 2-layer structure as shown in FIG. 1 or FIG. 3, or two or more heat-resistant sheets 120 and 160 may be provided.

When the heat-resistant sheets 120 and 160 are formed in a 2-layer structure as in FIG. 1 or FIG. 3, they can be divided into an inner heat-resistant sheet 160 and an outer heat-resistant sheet 120. Both the heat-resistant sheets 120 and 160 are formed using HPI sheet, which is a substitute for a fiber reinforced board (FRB), and thus have heat resistance. Accordingly, the heat-resistant sheets 120 and 160 can serve as a flame barrier that prevents thermal propagation in which flame generated during thermal runaway flows into the adjacent battery module 700 or battery cell 800.

The silicone sheet 140 is also provided to prevent heat transfer to an adjacent battery module 700 or battery cell 800 in a high-temperature environment created by flames caused by thermal runaway occurring in a specific battery module 700 or battery cell 800. However, if one heat-resistant sheet 120 is provided, the silicone sheet may melt or be damaged due to instantaneous high temperature when flames are generated due to thermal runaway. Therefore, in the present disclosure, as shown in FIG. 1 or FIG. 3, by bonding the plurality of heat-resistant sheets 120 and 160 to the silicone sheet 140, the structure of the battery module cover is prevented from being damaged.

Since the heat-resistant sheets 120 and 160 and the silicon sheet 140 constituting the outer plate 100 are bonded to the cover plate 300 and the insulating sheet 400 to form the battery module cover, as shown in FIG. 1 or FIG. 3, provisional cut lines 122, 142, and 162 capable of discharging gas or flame generated during thermal runaway in a specific battery module 700 or battery cell 800 are formed as shown in FIG. 1. The provisional cut lines 122, 142, and 162 of the outer plate 100 are formed in the plurality of heat-resistant sheets 120 and 160 and the silicon sheet 140 and formed at positions corresponding to the through holes 320 of the cover plate 300 and the venting portions 500 of the insulating sheet 400 effectively discharge gas or flame generated during thermal runaway.

It is preferable that the provisional cut lines 122, 142, and 162 of the outer plate 100 be formed in the same shape as the through holes 320 of the cover plate 300, as illustrated in FIG. 1, for effective discharge of gas or flame. Accordingly, they may be formed in an oval shape in which the length in the longitudinal direction of the outer plate 100 is greater than the length in the width direction of the outer plate 100. Unlike the venting portions 500 of the insulating sheet 400, the outer plate 100 is formed of a material that can be smoothly opened in a high-pressure environment created during thermal runaway, and thus it is preferable to form the provisional cut lines 122, 142, and 162 such that they are closed in normal times to prevent inflow of gas or flame from an adjacent battery module 700 or battery cell 800 and opened during thermal runaway in the battery module 700 or battery cell 800. That is, the provisional cut lines 122, 142, and 162 of the outer plate 100 are formed to be spaced apart from each other and formed to be cut and opened only when necessary by the internal pressure of the battery module 700, thereby facilitating discharge of gas or flame in the event of thermal runaway in the battery module 700 or battery cell 800 while blocking reverse inflow of gas or flame from an adjacent battery module 700 or battery cell 800.

FIG. 10 shows a battery pack BP to which the battery module cover of the present disclosure is applied and a state in which such a battery pack is mounted in a vehicle V. The battery pack BP of the present disclosure may be applied to various industries in addition to the vehicle V, and an example thereof is an electric energy storage system (ESS). According to the battery module cover, the battery pack BP, and the vehicle V including the same, when thermal runaway occurs in a specific battery module 700 or battery cell 800, gas or flame generated due to the thermal runaway can be smoothly discharged and the gas or flame can be prevented from flowing back into an adjacent battery module 700 or battery cell 800.

Although the present disclosure has been described above with reference to preferred embodiments, it will be understood by those skilled in the art that various modifications and changes may be made to the present disclosure without departing from the idea and scope of the present disclosure as set forth in the following claims.

## Claims

1. A battery module cover comprising:
a cover plate covering one side of a battery module and having a plurality of through holes; and
an insulating sheet provided between the cover plate and battery cells and having a venting portion formed at a point corresponding to each of the through holes of the cover plate, the venting portion including a pair of cut lines and a non-cut portion provided between the pair of cut lines.

2. The battery module cover of claim 1, wherein the insulating sheet is formed by combining a fire-resistant material and a woven fabric.

3. The battery module cover of claim 1, wherein the venting portion of the insulating sheet is equal to or smaller than the size of the through hole of the cover plate, and the non-cut portion of the venting portion is formed at a point between the pair of cut lines.

4. The battery module cover of claim 1, wherein each of the cut lines of the venting portion is composed of a base part and a branch part,
wherein the base part is formed to extend in a longitudinal direction of the through hole of the cover plate, the branch part branches and extends in an inclined direction from an end of the base part, the branch parts included in the pair of cut lines are formed at ends of the base parts further away from each other, ends of the base parts closer to each other face each other while being spaced apart from each other, and the non-cut portion of the venting portion is formed at a point between the base parts of the pair of cut lines.

5. The battery module cover of claim 4, wherein the cut line of the venting portion includes a plurality of base parts, the branch part branches and extends in an inclined direction from a center point of the plurality of base parts, the plurality of base parts is arranged in parallel, and the branch part is connected to ends of the plurality of base parts.

6. The battery module cover of claim 1, wherein a plurality of battery cells constitutes one unit cell bank, a cut line corresponding to the unit cell bank includes a plurality of base parts arranged in parallel, and the base parts are arranged to correspond to a point between two adjacent battery cells.

7. The battery module cover of claim 1, wherein a plurality of battery cells is provided inside the battery module, and the through hole of the cover plate is formed at a point between adjacent pairs of battery cells such that the through hole overlaps at least a portion of an upper surface of the pair of battery cells facing the insulating sheet.

8. The battery module cover of claim 1, wherein the venting portion of the insulating sheet is cut open when the battery module catches fire to allow gas or flame to be discharged.

9. The battery module cover of claim 1, wherein the pair of cut lines of the venting portion are formed such that closer ends of the cut lines face each other, the ends of the pair of cut lines facing each other are spaced apart from each other by a length of 3 mm or less, and the non-cut portion is formed between the ends of the pair of cut lines spaced apart from each other.

10. The battery module cover of claim 1, wherein the through hole of the cover plate has an oval shape in which a length of the through hole in the longitudinal direction of the cover plate is greater than a length in the width direction of the cover plate.

11. The battery module cover of claim 1, wherein an outer plate is bonded to an outer side of the cover plate, and the outer plate is composed of a plurality of heat-resistant sheets and a silicone sheet positioned between the heat-resistant sheets.

12. The battery module cover of claim 11, wherein the outer plate includes a provisional cut line formed in the silicon sheet and the plurality of heat-resistant sheet and having the same shape as the through hole, the provisional cut line being formed at a position corresponding to the through hole and the venting portion.

13. The battery module cover of claim 12, wherein a plurality of provisional cut lines is formed in the outer plate, and the provisional cut lines are cut open by a pressure inside the battery module.

14. A battery pack comprising the battery module cover of claim 1.

15. A vehicle comprising the battery pack of claim 14.
